# EUROPEAN PATENT APPLICATION

(11) **EP 0 685 196 A1**
(43) Date of publication of application: **06.12.1995**
(21) Application number: 95500055.9
(22) Date of filing: 21.04.1995
(51) Int. Cl.: A47J 43/27

(54) **Improved manual beater mixer**

(30) Priority: 09.05.1994 ES 9401248
(71) Applicant: PLASTICOS DE GALICIA, S.A., E-36210 Vigo (Pontevedra) (ES)
(72) Inventor: Domingo Villar, Otero, E-36210 Vigo (ES)
(74) Representative: De la Fuente Fernandez, Dionisio

(57) **Abstract**

An improved manual beater-mixer, useful as a means for mixing, beating and homogenising one or several products placed inside the same, comprising two bodies, a top body (2) having an upper opening hemmed by a cylindrical raised portion (6) to receive a sealing cap (5), and a bottom body (3) that can be locked to the top body (2) and having an inner perimetric staggering next to its edge or mouth, upon which a disc (4) having a plurality of spokes (11) is seated, the assembly having a general oval shape when the two bodies (2) and (3) are locked to each other.

## Description

### OBJECT OF THE INVENTION

The present specification relates to an improved manual beater-mixer devised to be used as an element capable of beating, mixing and homogenising one or several products, namely for instance when making punch or the like using various products having different densities it is employed to obtain a fully homogenised mixture of the ingredients used, the contents being removable from the container after beating and mixing as aforesaid through a mouth lying at one of its ends and having a sealing cap, this cap being provided with a tab for attaching the same to the upper area of the top part of the vessel making up the manual beater-mixer.

### FIELD OF THE INVENTION

The beater-mixer of the invention is applicable within the household and industrial utensil and ancillary appliance manufacturing industry.

### DESCRIPTION OF THE INVENTION

The improved manual beater-mixer subject of the present invention is per se clearly a solution to fill an important gap that is currently to be found in the field of utensils applicable as household equipment or appliances, for the same can be used to make punch, a cocktail or a milk shake by simply placing the ingredients inside the vessel, then coupling the various elements making up the beater-mixer, thereby to obtain a homogeneous mixture of the products inserted, the mixture being removable from the container vessel through a mouth having a sealing cap lying at the upper end of the body giving the beater-mixer its shape.

More specifically, the improved manual beater-mixer subject of the invention comprises two bodies, preferably made of a stiff plastic material, the bodies being joined to one another at a fixing and locking area to take up a general oval shape, the inner portion of the mouth of the bottom body being staggered to receive and retain a circular disc made of an identical material, comprising two concentric circular crowns joined to each other through different spokes, which disc is retained at the staggering when the top and the bottom parts are coupled to each other, the disc having been designed to enhance the beating, mixing and homogenising of the various ingredients placed inside the bottom body.

After closing and fixing the parts or bodies making up the beater-mixer, the user will hold the general body manually and after suitably shaking it, will obtain as a result a perfect mixture and beating of the products placed inside the vessel, thereupon removing the contents through a central opening found at the end of the top body, this opening being hemmed by an upward perimetric projection that receives the lower cylindrical projection of a cap that can be attached to the body supporting the same, namely the top body, by means of a tab or strap having a perforation at one end through which it can be fixed at such end to a salient lying on the said top body and having a transverse slot adapted to receive the said end of the said tab.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure 1 is a perspective view of the improved manual beater-mixer subject of the invention showing all the elements that make it up separately.

Figure 2 is a perspective view of the same object shown in Figure 1, with all the elements coupled to each other and with the beater-mixer hence in an operative position.

Figure 3 is a side elevation view of a cross-section of the central area of the beater-mixer of the invention, which is where the two bodies that make it up are joined and between which the circular disc fostering the beating, mixing and homogenising of the products placed inside the vessel is located.

### PREFERRED EMBODIMENT OF THE INVENTION

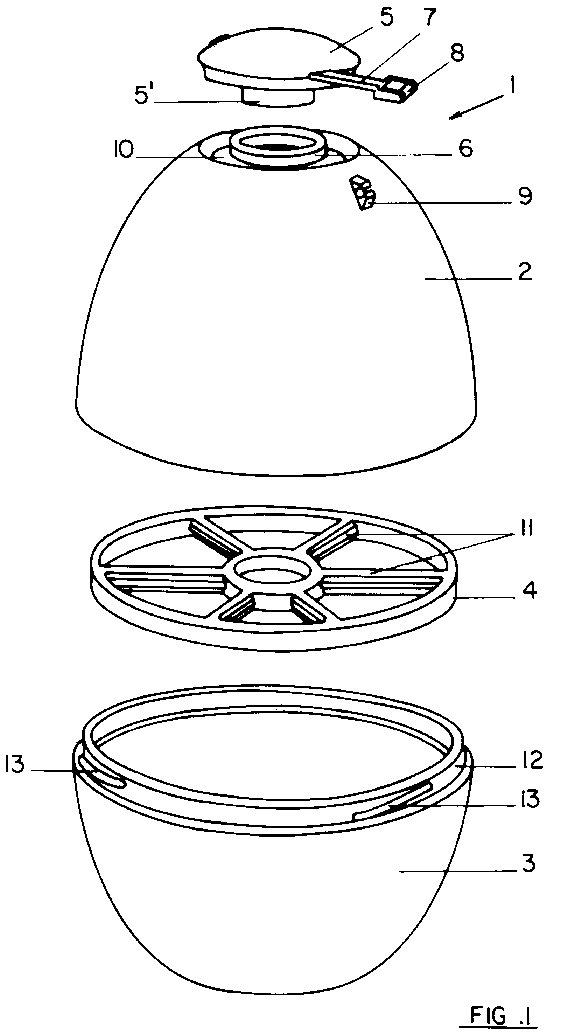

With reference to Figure 1 of the drawings, the improved manual beater-mixer (1) of the invention can be seen to comprise an assembly of four parts preferably made of a stiff plastic material, namely as follows: a top body (2), a bottom body (3), a central disc (4) and a top cap (5). The general oval body (1) of the beater-mixer of the invention is made by joining the top (2) and bottom (3) parts, such assembly taking place by coupling the bottom edge of the body (2) onto a seat provided on the top edge of the body (3) and defining a cylindrical raised portion (12) at the mouth of the said bottom body (3). The said cylindrical raised portion (12) has inclined external ribs (13) acting as a means to ensure that both parts (2) and (3) are removably mounted. On the inside portion of the mouth area, the said bottom body (3) has a staggering upon which the disc (4) is seated, the disc being circular in plan and comprising two concentric circular crowns that are joined to each other through a plurality of spokes (11), the said disc (4) acting as an element dividing the inner space provided by the two bodies (2) and (3), and being designed to foster the mixing, beating and homogenising of the product or products placed inside the beater-mixer when the latter is shaken manually.

The top body (2) has a circular plan opening at its uppermost area, the opening being perimetrically hemmed by a cylindrical raised portion (6) constituting a mouth for the said body (2). The said cylindrical raised portion (6) is surrounded by a recess (10) provided on the top edge of the same body. In addition, the assembly has a cap (5) having a cylindrically-shaped downward projection (5') through which it is coupled to the raised portion (6) on the top opening of the body (2), closing and sealing the inner space, the said cap having a lower perimetric sleeve that is substantially cone frustum-shaped that adjusts to the recess (10) on the top body (2).

The cap (5) further has a side tab (7) that is also made of a plastic material and has some flexibility, with a buckle-shaped deformation (8) at its free end designed for the cap (5) to be fixed to the top body (2) by inserting such buckle (8) in a transverse slot found on a side embossment or salient (9) there is on such body (2).

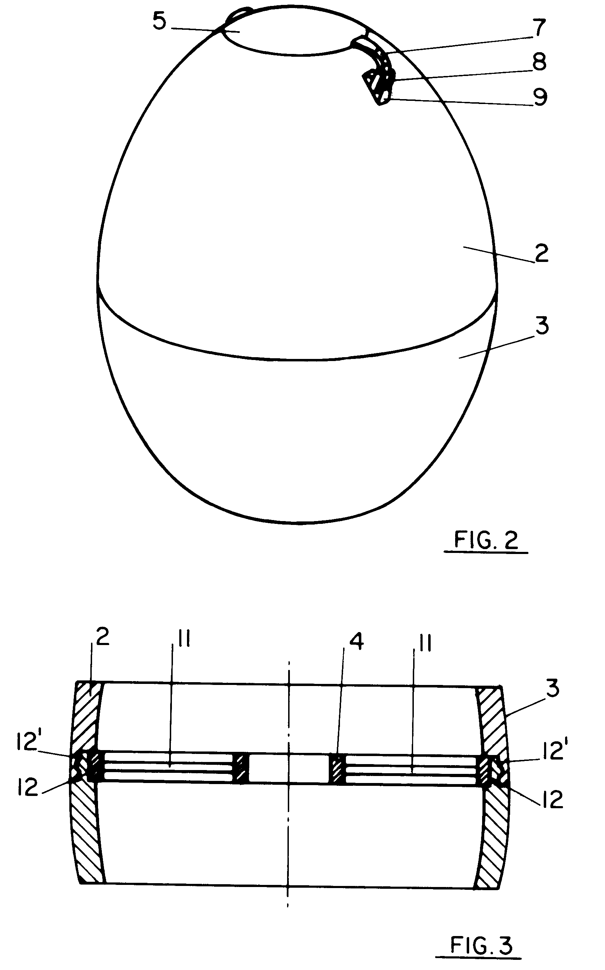

Figure 3 shows a side elevation view of a cross-section of the intermediate area or area at which both bodies (2) and (3) are joined, with the disc (4) lying on the inner seat at the mouth of the lower body (3). This same figure shows the inner portion of the lower end (12') of the top body (2) correspondingly adjusting itself through an internal staggering (not numbered) to lie on the said intermediate disc (4) and has recesses at certain positions to house therein ribs (13) found on the inner body, thereby for the two bodies to be locked to one another simply by turning one body relative to the other.

With the assembly thus formed and once the top body (2) is closed and sealed by inserting the downward projection (5') of the cap (5) in the raised portion (6), the user can shake the liquids or products placed inside the vessel thus formed, thereby to perfectly mix, beat and homogenise the said products with the assistance of the disc (4) found at the area where the two bodies are joined, and its spokes (11).

We feel that the description need not be extended any longer for any expert in the art to have grasped the full scope of the invention and the advantages it offers.

## Claims

**1.-** An improved manual beater-mixer, of the kind designed to suitably mix, beat and homogenise one or various products inside the same, characterised by comprising two parts, viz. a top (2) and a bottom (3) body, preferably made of a stiff plastic material, that are joined to each other through an upper perimetric raised portion (12) provided on the bottom body (3) and making up its mouth, with the assistance of external ribs (13) and a projection (12') provided on the lower edge of the part (2), to form a general oval body inside which a disc (4) is arranged, that is also preferably made of a stiff plastic material, the disc (4) having spokes (11) and being fixed upon an internal staggering there is on the bottom part (3) at which it is retained with the assistance of the top part (2).

**2.-** An improved manual beater-mixer, as in claim 1, characterised in that the top part (2) is provided on its upper area with a circular plan opening hemmed by a perimetric raised portion (6) designed to receive a lower cylindrical projection (5') of a cap (5), the said perimetric raised portion (6) being surrounded by a recess (10) lying on the edge of the part (2) as such, and receiving a lower and cone frustum-shaped perimetric sleeve that the said cap (5) is provided with.

**3.-** An improved manual beater-mixer, as in claims 1 and 2, characterised in that the said cap (5) is held to the top body (2) through a side tab (7) projecting from such cap, made of a stiff plastic material, its free end having a buckle-shaped deformation (8) that is insertable in a transverse slot provided on a side projection (9) lying on the top body (2).
